# DEMANDE DE BREVET EUROPEEN

(11) **EP 4 576 056 A1**
(43) Date de publication de la demande: **25.06.2025**
(21) Numéro de dépôt: 24222597.7
(22) Date de dépôt: 20.12.2024
(51) Int. Cl.: G09G 3/22

(54) **PIXEL EMETTEUR IR A DOUBLE ALIMENTATION**

(30) Priorité: 22.12.2023 FR 2315134
(71) Demandeur: Commissariat à l'Energie Atomique et aux Energies Alternatives, 75015 Paris (FR)
(72) Inventeur: MILLET, Laurent, 38054 GRENOBLE Cedex 09 (FR); AUDEBERT, Patrick, 38054 GRENOBLE Cedex 09 (FR)
(74) Mandataire: Brevalex

(57) **Abrégé**

Dispositif d'affichage IR pour l'affichage d'une scène et comprenant une pluralité de pixels chaque pixel étant doté :
- d'un émetteur (105) IR,
- d'un étage (120) de mémorisation couplé à l'étage de pilotage (110), l'étage de mémorisation comprenant au moins une capacité de mémorisation (Cmem, Cmem1) qui, lors de phases dites « d'écriture dans la première capacité de mémorisation » se charge à la tension de consigne (Vcons) et lors de phases dites « phases d'affichage » délivre à l'étage de pilotage la tension de consigne (Vcons), le premier pixel étant doté en outre d'un circuit de couplage (130, 430, 730), comportant un des éléments interrupteurs (131, 132 ; 431, 432, 433, 434 ; 731, 732, 733, 734, 735, 736, 737, 738) le circuit de couplage (130, 430, 730) étant configuré pour :
- lors des phases d'écriture dans la capacité de mémorisation: découpler la capacité de mémorisation (Cmem, Cmem1) de ladite première ligne d'alimentation (191) tout en couplant la capacité de mémorisation à une autre ligne d'alimentation (187),
- lors de phases d'affichage: coupler la première capacité de mémorisation (Cmem, Cmem1) à la ligne première d'alimentation (191) tout en découplant la capacité de mémorisation (Cmem, Cmem1) de l'autre ligne d'alimentation.

## Description

### DOMAINE TECHNIQUE ET ART ANTERIEUR

La présente invention concerne le domaine des dispositifs matriciels de projection d'images ou de scènes, également appelés dispositifs d'affichage et s'applique en particulier aux dispositifs d'affichage infrarouges qui génèrent des images dans la partie infrarouge du spectre électromagnétique.

Pour certaines applications particulières, telles que le test d'une caméra IR associée, l'analyse rapide de scènes, le suivi de scènes à haute température par exemple comportant du feu ou des matériaux à haute température, on peut en effet souhaiter utiliser un dispositif d'affichage doté d'éléments émetteurs dans l'infra-rouge (IR).

Les dispositifs d'affichage de scène infrarouge comprennent généralement un ensemble de pixels thermiques, typiquement agencés en matrice, qui convertit des signaux d'entrée électriques en une image thermique ou infrarouge souhaitée. L'émetteur dans chaque pixel peut être sous forme d'une membrane dans laquelle on fait passer un courant Imembrane plus ou moins élevé en fonction de l'intensité que l'on cherche à afficher. Le courant Imembrane échauffe la membrane qui émet par effet joule un rayonnement IR dont l'intensité dépend de celui du courant Imembrane.

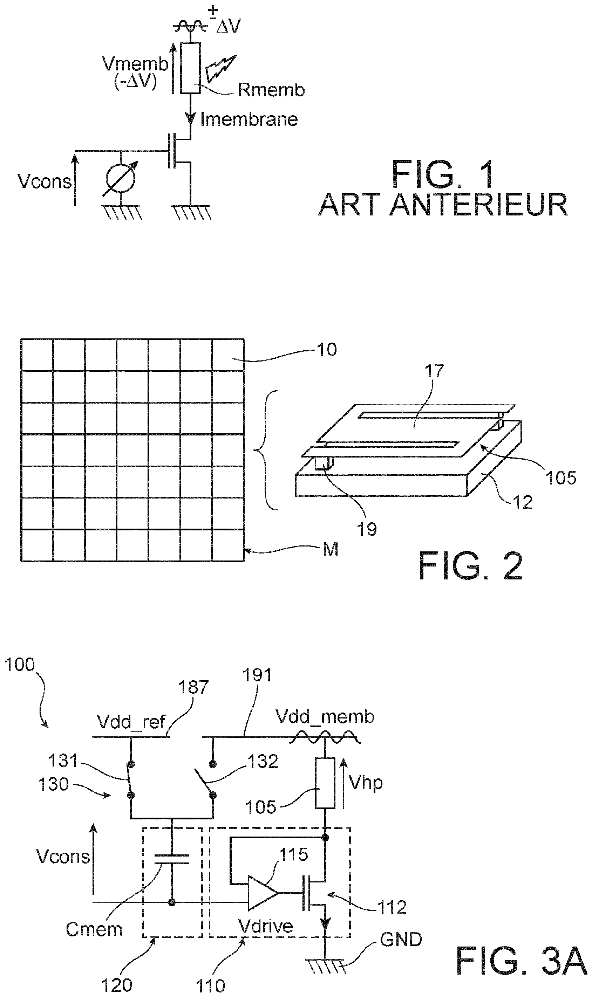

La figure 1 donne un exemple de structure conventionnelle d'un pixel P d'imageur IR, la membrane étant représentée de manière schématique par une résistance Rmemb. Le pixel est également pourvu d'un transistor de commande de pixel T₁ qui convertit une tension d'entrée électrique de consigne Vcons en un courant de commande de la résistance Rmemb, laquelle dissipe par conséquent une quantité correspondante de chaleur, ou d'énergie thermique, en fonction de l'amplitude de cette tension d'entrée Vcons. Cette tension d'entrée Vcons est couramment enregistrée aux bornes d'une capacité de mémorisation (non représentée sur cette figure) prévue en amont du transistor T1.

Ainsi, en ajustant précisément la tension d'entrée Vcons de chaque pixel, on contrôle son émission infrarouge et on définit ainsi une image infrarouge.

On cherche de préférence à conserver une bonne dynamique d'affichage, ce paramètre pouvant être défini ici par la tension maximale que l'on peut appliquer aux bornes de la membrane Vmemb.

La puissance dissipée par la membrane se calcule quant à elle avec la tension à ses bornes (Vmemb) et la résistivité aux borne de la membrane (Rmemb) selon la formule : Pmemb= Vmemb ²/ Rmemb [1].

On cherche également à obtenir une bonne précision, ce paramètre pouvant être défini comme la plus petite variation de tension Vmemb pilotable aux bornes de la membrane. Pour pouvoir afficher les parties les plus chaudes d'une scène cela requiert typiquement que la membrane puisse émettre un rayonnement IR équivalent à plusieurs centaines de degrés. Or, un pixel a une dynamique d'affichage typiquement dépendante de la technologie avec lequel il est réalisé. En technologie CMOS, cette limite est de l'ordre de 3~5V ce qui peut s'avérer très limitant.

De la formule [1] donnée plus haut, on en déduit que pour atteindre des hautes températures, une membrane faiblement résistive est de préférence requise.

Par ailleurs, pour pouvoir distinguer certains détails d'une scène courante, à basse température, par exemple inférieure à 50°C une forte précision aux faibles émissions est de préférence nécessaire. Cette contrainte de précision est d'ailleurs d'autant plus importante lorsque le besoin d'atteindre des températures élevées est important : de sorte que plus une dynamique d'affichage élevée est requise plus une précision importante de pilotage est requise.

Si l'on prend un exemple particulier avec Rmemb prévue pourviser 500°C (et que l'on suppose constant pour des raisons de simplification des calculs), on peut alors avoir besoin d'une précision de 15 bits et un pas de pilotage de :
Vstep = 4V / 32768 = 122µV (32768= 15bits)
Tstep = 500 / 32768 = 0.015°C

Si l'on souhaite afficher une scène chaude telle qu'un incendie, de nombreux pixels du dispositif d'affichage devront émettre un fort courant dans leurs membranes respectives. Or, pour chauffer une membrane à plusieurs centaines de degrés, le courant nécessaire (qui dépend de la résistivité de la membrane choisie, et des propriétés émettrices de celle-ci) peut être de l'ordre de plusieurs centaines de µA. Dans le cas d'une matrice de grande dimension, par exemple de 1024×1024 pixels ou supérieure, la consommation totale correspondante peut se chiffrer alors en milliers de watts.

Compte tenu des puissances mises en jeu, un appel de courant dans la matrice peut être amené à varier d'une valeur très faible lorsqu'on affiche une scène froide, à plusieurs centaines d'ampères lorsqu'une grande partie des pixels sont sollicités pour afficher une scène chaude.
Par ailleurs, les grilles d'alimentations à l'intérieur de la matrice n'étant pas parfaites, on observe alors des variations d'alimentation importantes, que ce soit sur les lignes d'alimentation hautes délivrant un potentiel d'alimentation Vdd qui peut être de plusieurs volts, par exemple autour de 5V ou sur les lignes d'alimentation basse à un potentiel d'alimentation bas GND, par exemple autour de 0V.

Une variation ΔV dynamique d'une image à l'autre des alimentations de l'ordre de plusieurs mV peut être observée. Cela fausse la valeur que l'on cherche à afficher. La puissance dissipée dans la membrane n'est pas exacte, puisque la tension à ses bornes a varié de ΔV.

Le document US 6316777B1 présente un exemple de dispositif d'affichage connu et formé d'une matrice d'éléments émetteurs IR.

Il se pose le problème de trouver un nouveau dispositif d'affichage qui soit amélioré vis-à-vis d'au moins un des inconvénients précités.

### EXPOSÉ DE L'INVENTION

C'est par conséquent un but d'offrir un dispositif d'affichage infrarouge, pour l'affichage d'une scène et comprenant une pluralité de pixels chaque pixel de la pluralité de pixels étant doté :
- d'un émetteur infrarouge, l'émetteur comprenant une première borne couplée à une première ligne d'alimentation et une deuxième borne couplée à une sortie d'un étage de pilotage,
- dudit étage de pilotage de l'émetteur, cet étage de pilotage de l'émetteur comprenant un élément de conversion tension-courant pour recevoir une tension de consigne et délivrer un courant de commande basé sur cette tension de consigne,
- d'un étage de mémorisation couplé à une entrée de l'étage de pilotage, l'étage de mémorisation comprenant au moins une capacité de mémorisation qui, lors de phases dites « d'écriture dans la capacité de mémorisation » se charge à la tension de consigne et lors de phases dites « phases d'affichage de valeur mémorisée par la capacité de mémorisation » délivre à l'étage de pilotage la tension de consigne,
le premier pixel étant doté en outre d'un circuit de couplage comportant des éléments interrupteurs le circuit de couplage étant configuré pour:
- lors des phases « d'écriture dans la capacité de mémorisation »: découpler la capacité de mémorisation de ladite première ligne d'alimentation tout en couplant la capacité de mémorisation à une autre ligne d'alimentation,
- lors des phases « d'affichage de valeur mémorisée par la capacité de mémorisation »: coupler la première capacité de mémorisation à la ligne première d'alimentation tout en découplant la capacité de mémorisation de l'autre ligne d'alimentation.

Ainsi, lors des phases d'écriture dans la capacité de mémorisation celle-ci est isolée de l'alimentation des émetteurs susceptible de subir des chutes de tension et l'on alimente cette capacité par le biais d'une autre alimentation qui, est moins susceptible d'être soumise à des chutes de tension.

Cela permet de gagner en précision sur la transmission de la tension de consigne et/ou de s'affranchir de perturbations/chutes d'alimentation.

De préférence, l'invention prévoit un dispositif d'affichage infrarouge, pour l'affichage d'une scène et comprenant une pluralité de pixels chaque pixel de ladite pluralité de pixels étant doté :
- d'un émetteur infrarouge comprenant une première borne couplée à une première ligne d'alimentation et une deuxième borne couplée à une sortie d'un étage de pilotage,
- de l' étage de pilotage de l'émetteur, cet étage de pilotage de l'émetteur comprenant un élément de conversion tension-courant pour recevoir une tension de consigne et délivrer un courant de commande basé sur cette tension de consigne, l'étage de pilotage étant doté en outre d'un amplificateur comportant une première entrée couplée à un étage de mémorisation et d'une deuxième entrée couplée à l'émetteur, une sortie de l'amplificateur étant reliée à la deuxième entrée de sorte à réaliser une contre-réaction,
- de l'étage de mémorisation, cet étage de mémorisation étant couplé à un noeud d'entrée de l'étage de pilotage, l'étage de mémorisation comprenant au moins une capacité de mémorisation, qui, lors de phases dites « d'écriture dans la capacité de mémorisation » se charge à la tension de consigne et lors de phases dites « phases d'affichage de valeur mémorisée par la capacité de mémorisation » délivre à l'étage de pilotage la tension de consigne, ladite au moins une capacité de mémorisation ayant une première électrode agencée entre le noeud d'entrée de l'étage de pilotage et un noeud d'entrée du pixel et une deuxième électrode agencée entre la première ligne d'alimentation et une autre ligne d'alimentation,
chaque pixel du dispositif d'affichage étant doté en outre d'un circuit de couplage, comportant des éléments interrupteurs, dont les états respectifs passant et bloqué, sont commandées respectivement par des signaux de commande de phase d'affichage et d'écriture, le circuit couplage étant configuré pour:
- lors de phases « d'écriture dans la capacité de mémorisation »: découpler la capacité de mémorisation de ladite première ligne d'alimentation tout en couplant la capacité de mémorisation à l'autre ligne d'alimentation,
- lors de phases « d'affichage de valeur mémorisée par la capacité de mémorisation »: coupler la première capacité de mémorisation à la première ligne d'alimentation tout en découplant la capacité de mémorisation de l'autre ligne d'alimentation.

Typiquement, l'élément de conversion tension courant peut comporter un transistor doté d'une électrode, de source ou de drain, connectée à l'émetteur.

Avantageusement, l'étage de pilotage est doté d'un suiveur formé d'un amplificateur comportant une première entrée couplée à l'étage de mémorisation et une contre réaction sur une deuxième entrée de l'amplificateur, l'amplificateur ayant une sortie couplée à l'émetteur.

Selon un mode de réalisation avantageux, le dispositif comprend en outre un interrupteur de réinitialisation entre le noeud d'entrée de l'étage de pilotage et ladite première ligne d'alimentation pour, préalablement à chaque phase d'affichage, coupler le noeud d'entrée de l'étage de pilotage à la première ligne d'alimentation lorsque l'interrupteur de réinitialisation est rendu passant.

Selon un mode de réalisation, le circuit couplage peut comprendre :
- un premier élément interrupteur entre une première électrode de la capacité de mémorisation et l'autre ligne d'alimentation,
- un deuxième élément interrupteur entre une deuxième électrode de la capacité de mémorisation et un noeud d'entrée de l'étage de mémorisation,
- un troisième élément interrupteur entre la première électrode de la capacité de mémorisation et la première ligne d'alimentation,
- un quatrième élément interrupteur entre la deuxième électrode de la première capacité de mémorisation et un noeud d'entrée de l'étage de pilotage de l'émetteur, et dans lequel la fin des phases d'écriture dans la capacité de mémorisation est déclenchée respectivement par un premier signal de déclenchement de fin d'écriture appliqué audit premier élément interrupteur et par un deuxième signal de déclenchement de fin d'écriture appliqué audit autre élément interrupteur, le premier signal de déclenchement de fin d'écriture et le deuxième signal de déclenchement de fin d'écriture étant décalés dans le temps et/ou dans lequel un démarrage desdites phases d'affichage d'une valeur mémorisée dans la capacité de mémorisation est déclenchée respectivement par un premier signal déclenchement de démarrage d'affichage appliqué audit troisième élément interrupteur et un deuxième signal de déclenchement de démarrage d'affichage appliqué audit quatrième élément interrupteur, le premier signal de déclenchement de démarrage d'affichage et le deuxième signal de déclenchement de démarrage d'affichage étant décalés dans le temps.

Selon un mode de réalisation particulier, la capacité de mémorisation est une première capacité de mémorisation et l'étage de mémorisation comporte également une deuxième capacité de mémorisation, la deuxième capacité de mémorisation ayant une première électrode agencée entre le noeud d'entrée de l'étage de pilotage et un noeud d'entrée du pixel et une deuxième électrode agencée entre la première ligne d'alimentation et une autre ligne d'alimentation,
le circuit couplage étant configuré pour :
- lors des phases « d'écriture dans la première capacité de mémorisation »: déconnecter la première électrode de la première capacité de mémorisation de la première ligne d'alimentation tout en connectant la première électrode de la première capacité de mémorisation à l'autre ligne d'alimentation et connecter la deuxième électrode de la première capacité de mémorisation au noeud d'entrée du pixel tout en déconnectant la deuxième électrode de la première capacité de mémorisation du noeud d'entrée de l'étage de pilotage,
- lors des phases « d'affichage de valeur mémorisée par la première capacité de mémorisation »: connecter la première électrode de la première capacité de mémorisation à la première ligne d'alimentation tout en déconnectant la première électrode de la première capacité de mémorisation de l'autre ligne d'alimentation et déconnecter la deuxième électrode de la première capacité de mémorisation du noeud d'entrée du pixel tout en connectant la deuxième électrode de la première capacité de mémorisation au noeud d'entrée de l'étage de pilotage,
- lors de phases « d'écriture dans la deuxième capacité de mémorisation »: déconnecter la première électrode de la deuxième capacité de mémorisation de la première ligne d'alimentation tout en connectant la première électrode de la deuxième capacité de mémorisation à l'autre ligne d'alimentation et connecter la deuxième électrode de la deuxième capacité de mémorisation au noeud d'entrée du pixel tout en déconnectant la deuxième électrode de la deuxième capacité de mémorisation du noeud d'entrée de l'étage de pilotage, lors des phases « d'affichage de valeur mémorisée par la deuxième capacité de mémorisation »: connecter la première électrode de la deuxième capacité de mémorisation à la première ligne d'alimentation tout en déconnectant la première électrode de la deuxième capacité de mémorisation de l'autre ligne d'alimentation et déconnecter la deuxième électrode de la deuxième capacité de mémorisation du noeud d'entrée du pixel tout en connectant la deuxième électrode de la deuxième capacité de mémorisation au noeud d'entrée de l'étage de pilotage, et
dans lequel les phases d'écriture dans la première capacité de mémorisation sont concomitantes aux phases de lecture dans la deuxième capacité, et dans lequel les phases d'écriture dans la deuxième capacité de mémorisation sont concomitantes aux phases de lecture dans la première capacité.

Avantageusement, selon un mode de réalisation particulier, le circuit de couplage peut comprendre :
- un élément interrupteur entre une première électrode de la capacité de mémorisation et la première ligne d'alimentation
- un élément interrupteur entre la première électrode de la capacité de mémorisation et l'autre ligne d'alimentation,
- un élément interrupteur entre la deuxième électrode de la capacité de mémorisation et un noeud d'entrée de l'étage de pilotage de l'émetteur,
- un élément interrupteur entre une deuxième électrode de la première capacité de mémorisation et un noeud d'entrée de l'étage de mémorisation.

Lorsque le pixel est doté d'une deuxième capacité de mémorisation, le circuit de couplage peut être également comprendre :
- un élément interrupteur entre une première électrode de la deuxième capacité de mémorisation et la première ligne d'alimentation,
- un élément interrupteur entre la première électrode de la deuxième capacité de mémorisation et l'autre ligne d'alimentation,
- un élément interrupteur entre la deuxième électrode de la deuxième capacité de mémorisation et le noeud d'entrée de l'étage de mémorisation,
- un élément interrupteur entre la deuxième électrode de la deuxième capacité de mémorisation et le noeud d'entrée de l'étage de pilotage de l'émetteur.

Selon une possibilité de réalisation du dispositif d'affichage et dans lequel un premier pixel de ladite pluralité de pixels appartient à une première rangée de pixels et dans lequel un deuxième pixel d'une deuxième rangée de pixels appartient à une deuxième rangée de pixels distincte de la première rangée, et dans lequel les phases d'affichage sont des phases d'affichage concomitantes des pixels de la première rangée et de la deuxième rangée de pixels, le circuit de couplage du deuxième pixel peut être configuré en outre pour lors desdites phases d'affichage, coupler la capacité de mémorisation du deuxième pixel à ladite ligne première d'alimentation tout en découplant la capacité de mémorisation du deuxième pixel de ladite autre ligne d'alimentation et pour lors de phases d'écriture dans la capacité de mémorisation du deuxième pixel découpler la capacité de mémorisation du deuxième pixel de ladite première ligne d'alimentation tout en couplant la capacité de mémorisation du deuxième pixel à ladite autre ligne d'alimentation.

En variante, selon une autre possibilité de mise en oeuvre du dispositif d'affichage dans lequel un premier pixel de ladite pluralité de pixels appartient à une première rangée de pixels et dans lequel un deuxième pixel d'une deuxième rangée de pixels appartient à une autre pluralité de pixels et dans lequel des phases d'affichage de pixels de la deuxième rangée sont au moins partiellement décalées des phases d'affichage de la première rangée, le deuxième pixel peut avoir un circuit de couplage configuré pour lors de phases d'affichage du deuxième pixel coupler une capacité de mémorisation du deuxième pixel à la ligne première d'alimentation tout en découplant la capacité de mémorisation du deuxième pixel de ladite autre ligne d'alimentation et pour lors de phases d'écriture dans la capacité de mémorisation du deuxième pixel découpler la capacité de mémorisation du deuxième pixel de la première ligne d'alimentation tout en couplant la capacité de mémorisation du deuxième pixel à ladite ligne autre ligne d'alimentation.

Avantageusement, l'émetteur peut être alimenté entre la première ligne d'alimentation prévue pour acheminer un potentiel de polarisation donné et une deuxième ligne de polarisation prévue pour acheminer un potentiel de référence ou de masse, l'autre ligne étant prévue pour acheminer un potentiel sensiblement égal au potentiel donné, l'étage de pilotage et l'étage de mémorisation étant reliés à la deuxième ligne de polarisation.

Avantageusement l'autre ligne de potentiel peut être prévue pour acheminer un potentiel avec un faible décalage par rapport au potentiel de la première ligne d'alimentation pour permettre des compensations par exemple d'offset ou liées à des dispersions technologiques.

La première ligne d'alimentation peut être connectée à un réseau d'alimentation tandis que l'autre ligne d'alimentation est connectée à un autre réseau d'alimentation isolé du premier réseau d'alimentation.

Selon une possibilité de mise en oeuvre, les éléments interrupteurs du circuit de couplage sont des transistors, en particulier des transistors MOS.
Dans l'ensemble du document, l'expression « coupler » est utilisée pour désigner, une liaison électrique ou connexion, pouvant être directe ou pouvant être indirecte (c'est-à-dire réalisée à travers un ou plusieurs élément(s) / composant(s) intermédiaires).

### BRÈVE DESCRIPTION DES DESSINS

La présente invention sera mieux comprise sur la base de la description qui va suivre et des dessins en annexe sur lesquels:
- la figure 1 sert à illustrer une structure de circuit de pixel d'un dispositif d'affichage infra-rouge telle que mise en oeuvre suivant l'art antérieur.
- la figure 2 sert à illustrer un exemple d'agencement matriciel d'un d'affichage doté d'émetteurs IR, ici sous forme de membranes suspendues.
- la figure 3A et la figure 3B servent à illustrer différentes phases de fonctionnement d'un exemple de circuit de pixel comportant un émetteur IR tel que mis en oeuvre suivant l'invention et dans lequel un étage de mémorisation est alternativement couplé à une alimentation distincte de celle de l'émetteur IR lorsqu'il s'agit de mémoriser une valeur de consigne puis couplé à la même alimentation que celle de l'émetteur IR lorsqu'il s'agit de transmettre à l'émetteur la valeur de consigne pour qu'il émette un rayonnement infra-rouge correspondant.
- la figure 4 sert à illustrer un exemple de réalisation particulier du circuit de pixel IR.
- la figure 5 sert à illustrer une première méthode d'affichage qu'un dispositif d'affichage suivant l'invention est susceptible de mettre en oeuvre.
- la figure 6 sert à illustrer une deuxième méthode d'affichage qu'un dispositif d'affichage suivant l'invention est susceptible de mettre en oeuvre.
- la figure 7 sert à illustrer des couples de lignes d'alimentation pour différentes rangées de pixels pour permettre d'alimenter la capacité de mémorisation des pixels d'une même rangée par le biais d'une alimentation différente lors de phases certaines phases de fonctionnement que celle avec laquelle ils sont couplés lors d'autres phases de fonctionnement.
- la figure 8 sert à illustrer une troisième méthode d'affichage qu'un dispositif d'affichage suivant l'invention est susceptible de mettre en oeuvre.
- la figure 9 sert à illustrer un exemple de réalisation particulier d'un circuit de pixel doté d'une première capacité de mémorisation et d'une deuxième capacité de mémorisation.
- la figure 10 sert à illustrer un exemple de fonctionnement particulier du circuit de pixel d'afficheur selon la figure 4.
- la figure 11 sert à illustrer un circuit de pixel d'afficheur avec deux capacités de mémorisation et un bloc de réinitialisation.

### EXPOSÉ DÉTAILLÉ DE MODES DE RÉALISATION PARTICULIERS

On se réfère à présent à la figure 2 donnant une représentation schématique d'un exemple de dispositif d'affichage infra-rouge formé d'une pluralité de pixels, ici agencés en matrice M de plusieurs lignes (i.e. rangées horizontales) et plusieurs colonnes (i.e. rangées verticales) de pixels 10.

Chaque pixel 10 est doté d'un émetteur 105, dans cet exemple assimilable à une résistance chauffante et qui peut être par exemple formé d'une membrane 17 soutenue au-dessus d'un substrat 12 au moyen d'éléments 19 thermiquement isolants qui fournissent également des connexions électriques pour alimenter la membrane 17 en courant. La puissance infrarouge émise par l'émetteur 105 augmente de façon monotone avec la température. Un courant électrique traversant l'élément émetteur 105 détermine sa température et donc la puissance infrarouge qu'il émet. Chaque pixel comporte un circuit intégré au substrat 12 associé à son élément émetteur 105.

Ce circuit intégré fournit notamment un signal de commande à son émetteur 105 qui peut être réalisé par exemple en technologie CMOS. En ce qui concerne l'alimentation de la matrice M, chaque émetteur 105 est couplé à un réseau de distribution d'alimentation (non représenté) dite « haute » distribuant un potentiel d'alimentation noté Vdd_memb, par exemple de l'ordre de plusieurs volts (si l'on ne tient pas compte de phénomènes de chutes de tension exposés précédemment) et d'un réseau (non représenté) de distribution de tension d'alimentation dite « basse », distribuant un potentiel inférieur au potentiel d'alimentation, par exemple de l'ordre de 0V (sans tenir compte de phénomènes de chutes de tension exposés précédemment) ce réseau servant de référence ou de masse.

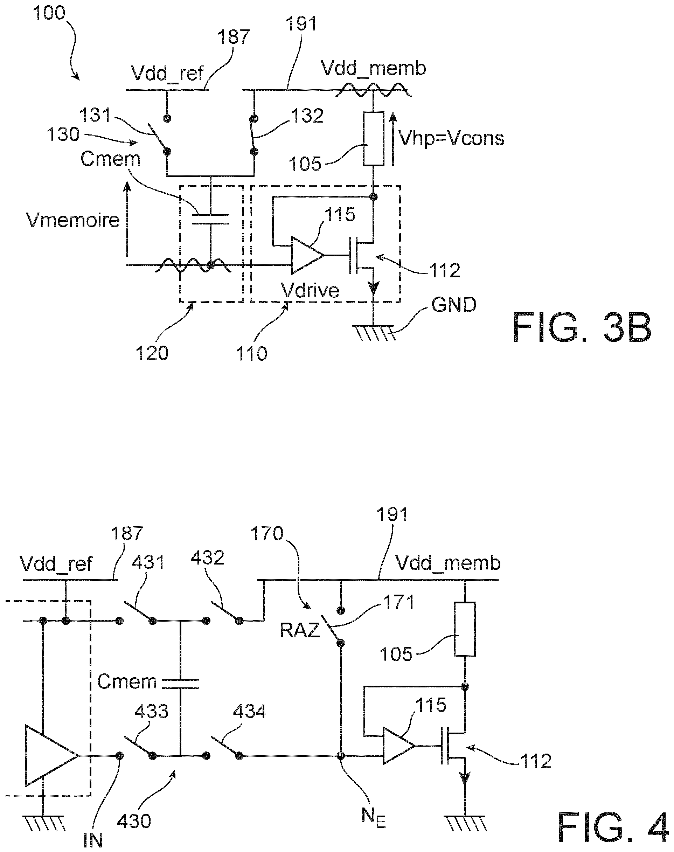

Un schéma électrique d'un circuit intégré 100 de pixel 10 du dispositif d'affichage est donné sur les figures 3A et 3B.

L'émetteur 105 infrarouge est contrôlé par un étage de pilotage 110 comprenant un élément de conversion tension-courant ici un transistor 112, dans cet exemple illustré de type NMOS, dont une électrode, ici l'électrode de drain, est connectée à l'émetteur 105. Un amplificateur 115 de contre-réaction est avantageusement connecté à la grille du transistor 112 et comporte une entrée rebouclée et reliée à un noeud de sortie Ns connecté à l'émetteur 105. Cet amplificateur 115, ici optionnel, permet de pallier l'éventuel manque de linéarité du transistor 112 de conversion.

L'émetteur 105 est couplé à une première ligne d'alimentation 191, ici une ligne d'alimentation haute délivrant le potentiel d'alimentation Vdd_memb, par exemple de l'ordre de quelques volts. Cette ligne d'alimentation 191 est-elle même connectée au réseau de distribution d'alimentation haute auquel les autres émetteurs IR des autres pixels de la matrice sont connectés et qui est typiquement sous forme d'une grille prévue pour acheminer le potentiel d'alimentation Vdd_memb. La première ligne d'alimentation 191 est ainsi ici une ligne d'alimentation d'émetteurs.

Le circuit de pixel est également doté d'un étage 120 dit « de mémorisation » comportant ici une capacité Cmem de mémorisation pour délivrer une tension de consigne Vcons en entrée de l'étage 110 de pilotage, ici entrée de l'amplificateur 115. Cette tension elle-même provient typiquement d'un bloc de contrôle (non représenté sur cette figure) auquel la rangée du pixel 10 en question est associée et qui peut comprendre par exemple un amplificateur, un multiplexeur et au moins un convertisseur numérique-analogique.

Le circuit 100 a également ici pour particularité d'être doté d'un circuit de couplage 130 particulier, ici agencé d'une part entre l'étage de mémorisation 120 et d'autre par la première ligne d'alimentation 191 et une autre ligne d'alimentation 187. Le circuit de couplage 130 comporte une pluralité d'éléments interrupteurs 131, 132, en particulier formés des transistors, par exemple de type MOS et de taille typiquement bien inférieure par exemple vingt fois plus petite que celle du transistor 112 de conversion tension courant.

Le circuit 100 de pixel 10 a également ici pour particularité d'être doté de cette autre ligne d'alimentation 187, spécifique, qui est distincte de la première ligne de la première ligne d'alimentation 191 c'est-à-dire, dans le cas d'espèce, ni connectée, ni couplée à la première ligne d'alimentation 191 et est isolée de cette première ligne d'alimentation 191.

Cette autre ligne d'alimentation 187, également appelée ligne d'alimentation de référence, n'est ainsi pas reliée au réseau de distribution d'alimentation haute auquel la première ligne d'alimentation 191 est elle-même reliée, mais peut être connectée à un autre réseau de distribution d'alimentation haute ou à d'autres moyens permettant de fournir un deuxième potentiel d'alimentation haut Vdd_ref, et qui, si l'on ne tient pas compte de phénomènes de chutes de tension, a une valeur théorique égale ou de l'ordre de la valeur théorique du premier potentiel d'alimentation haut Vdd_memb.

La figure 3A représente une première phase de fonctionnement du pixel 100 dite phase « d'écriture » qui correspond à une première configuration du circuit de couplage 130. Durant cette phase d'écriture, la capacité de mémorisation Cmem se charge à une tension de consigne Vcons provenant elle-même du bloc de contrôle en entrée précité (non représenté). Ce bloc de contrôle en entrée est par exemple doté d'un convertisseur numérique analogique et est typiquement partagé par les autres pixels d'une même rangée que celle du pixel dont le circuit 100 est ici représenté.

Durant cette phase d'écriture, le circuit de couplage 130 est prévu pour coupler l'autre ligne d'alimentation 187 Vdd_ref à la capacité Cmem de mémorisation, ici par le biais d'un élément interrupteur 131 fermé connectant l'autre ligne d'alimentation 187 Vdd_ref à une électrode de la capacité Cmem et pour découpler la première ligne d'alimentation 191 Vdd_ref de la capacité Cmem de mémorisation, ici par le biais d'un élément interrupteur 132 ouvert déconnectant (i.e. isolant) la première ligne d'alimentation 191 de cette même électrode de la capacité Cmem de mémorisation.

Ainsi, durant la phase d'écriture, l'étage de mémorisation 120 et en particulier la capacité d'alimentation Cmem est alimentée par le biais d'une alimentation distincte de celle de l'émetteur 105. En isolant durant cette phase, la capacité Cmem de l'alimentation à laquelle l'émetteur 105 est connecté, on charge la valeur de consigne Vcons dans la capacité sans que celle-ci ne subisse d'éventuelles importantes chutes de tensions auxquelles l'alimentation de l'émetteur 105 est susceptible d'être soumise. On maintient ici donc la précision de cette tension Vcons.

La figure 3B représente une deuxième phase de fonctionnement du pixel dite « d'affichage » qui correspond à une deuxième configuration du circuit de couplage 130. Durant cette phase d'affichage, le circuit de couplage 130 est configuré cette fois pour coupler la première ligne d'alimentation 191 Vdd_memb à la capacité Cmem de mémorisation, ici par le biais de l'élément interrupteur 132 fermé, et pour découpler la capacité Cmem de mémorisation de l'autre ligne d'alimentation 187 Vdd_ref, ici par le biais de l'élément interrupteur 131 ouvert.

Ainsi, durant la phase d'affichage, la différence de potentiels mémorisée par la capacité d'alimentation Cmem fournie en entrée de l'étage de pilotage 110 se traduit en un courant de commande de l'émetteur 105. La capacité de mémorisation Cmem est alimentée par le biais de la même alimentation que celle de l'émetteur 105. D'éventuelles perturbations sur la première ligne d'alimentation 191 se traduisent également sur la capacité de mémorisation Cmem qui est alors couplée et ici directement connectée à cette première ligne d'alimentation 191. Puisque la différence de potentiels aux bornes de la capacité est constante, une perturbation sur la première ligne 191 sera répercutée sur la consigne. On reste référencé au potentiel de la première ligne 191 et la capacité de mémorisation suit d'éventuelles chutes de tension.

Selon une variante de l'exemple de réalisation décrit précédemment, on peut remplacer le transistor 112 par un transistor de type différent, en particulier par un PMOS. L'émetteur 105 est alors dans ce cas agencé entre l'électrode de drain du transistor PMOS et une ligne d'alimentation basse, en particulier servant de masse GND.

De même que l'on connecte la capacité de mémorisation Cmem à la ligne d'alimentation 191 haute de l'émetteur 105 pendant la phase d'émission et que l'on connecte la capacité de mémorisation Cmem à l'autre ligne d'alimentation 187 haute pendant la phase d'écriture, on peut en variante ou en combinaison prévoir, de connecter la capacité de mémorisation Cmem à une ligne d'alimentation basse en particulier à la même masse à laquelle l'émetteur 105 est référencé pendant la phase d'émission et connecter la capacité de mémorisation Cmem à une autre ligne d'alimentation basse pendant la phase d'écriture qui est distincte de celle GND_memb de l'émetteur. On peut ainsi coupler la capacité de mémorisation Cmem à une masse GND_ref dissociée de la masse GND_memb à laquelle l'émetteur 105 est relié. Ainsi, dans ce cas, on peut prévoir deux réseaux d'alimentation basse ou servant de référence dissociées et non connectées l'une à l'autre.

Un autre exemple de réalisation est donné sur la figure 4, où un bloc 170 de réinitialisation typiquement formé d'un interrupteur de réinitialisation 171 aux bornes de la capacité de mémorisation Cmem peut être en outre intégré pour permettre de réinitialiser la tension du noeud N_{E} à un potentiel donné, ici imposé par la première ligne d'alimentation 191 et qui est identique d'une réinitialisation à l'autre. Le circuit de couplage 430 est ici doté de 4 interrupteurs 431, 432, 433, 434 dont on contrôle les états respectifs en fonction des différentes phases de fonctionnement.

En phase d'écriture, les interrupteurs 432, 434 sont ouverts, tandis que les interrupteurs 431 et 433 sont fermés (i.e. passants).

En phase d'affichage, les interrupteurs 432, 434 sont fermés (i.e. passants), tandis que les interrupteurs 431 et 433 sont ouverts.

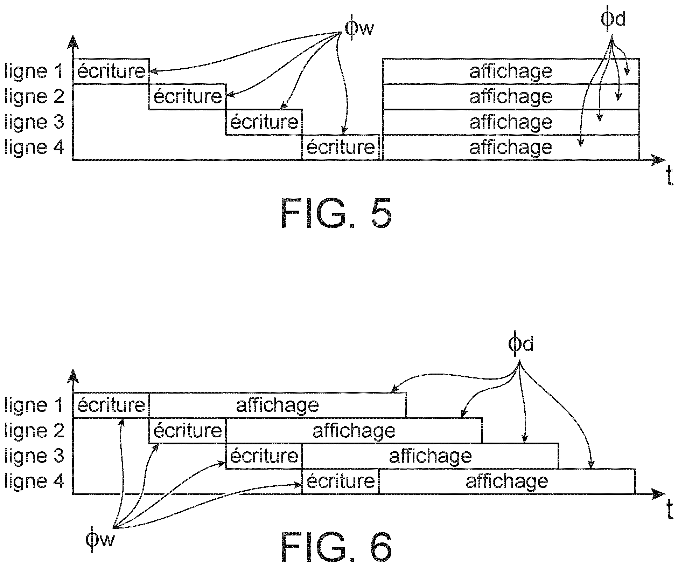

Un dispositif d'affichage tel que mis en oeuvre suivant l'invention peut s'appliquer à un affichage de type dit « d'affichage global » des pixels, semblable à un mode de fonctionnement dit « global shutter » (i.e. « obturation globale ») mis en oeuvre pour un dispositif de détection. Ainsi, sur le chronogramme de la figure 5, après des phases d'écritures Φw successives sur différentes rangées ligne1, ligne2, ligne3, ligne 4, les émetteurs 105 de pixels des différentes rangées ligne1, ligne2, ligne3, ligne4 de pixels sont simultanément placés en phase d'affichage Φd, ces phases d'affichage Φd étant alors simultanées.

Les pixels des rangées ligne1, ligne2, ligne3, ligne4 ont, lors de phases d'écriture Φw respectives, leur capacité de mémorisation découplée de l'alimentation des émetteurs IR tout en étant couplée à une autre alimentation et lors des phases d'affichage Φd, ces pixels ont leur capacité de mémorisation couplée à l'alimentation des émetteurs IR tout en étant découplée de cette autre alimentation.

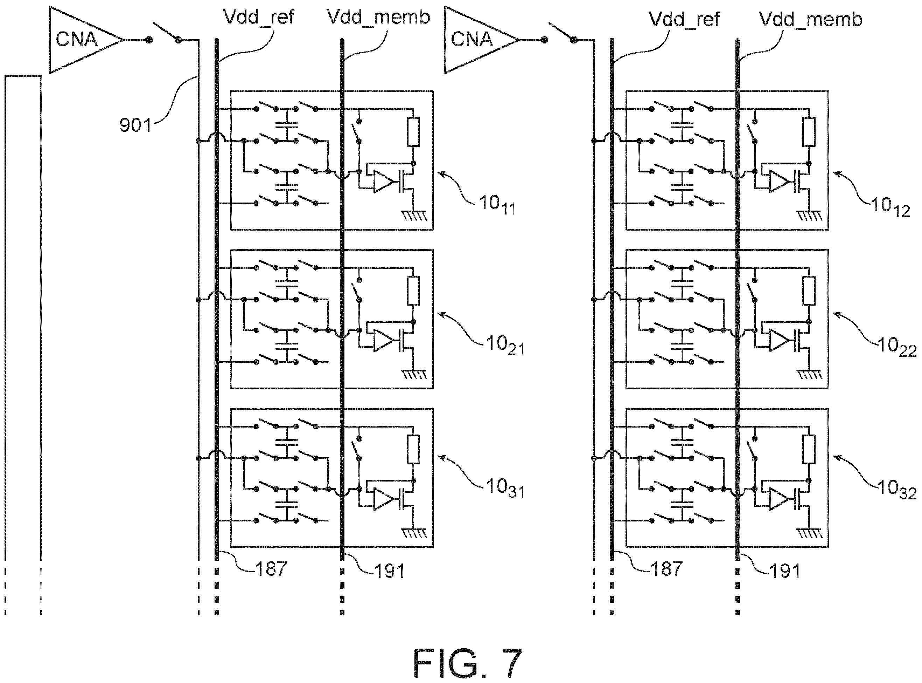

Pour ce type d'affichage, on peut prévoir comme sur la figure 7, une ligne d'alimentation 191 des émetteurs délivrant le potentiel d'alimentation Vdd_memb commune à plusieurs pixels 10₁₁, 10₂₁, 10₃₁,..., d'une même rangée verticale et de rangées horizontales distinctes. Une autre ligne d'alimentation 187 de référence délivrant le potentiel Vdd_ref, commune pour ces mêmes pixels 10₁₁, 10₂₁, 10₃₁,..., est prévue pour alimenter leurs capacités de mémorisation respectives en phase d'écriture.

Un autre couple de lignes d'alimentation délivrant respectivement le potentiel Vdd_memb et le potentiel d'alimentation Vdd_ref sont ici prévues pour d'autres pixels 10₁₂, 10₂₂, 10₃₂,..., d'une même rangée verticale.

En variante de l'exemple de réalisation particulier de la figure 7, il est également possible de prévoir des lignes d'alimentations 187, 191 délivrant respectivement le potentiel d'alimentation Vdd_ref et le potentiel d'alimentation Vdd_memb et qui sont communes cette fois à des pixels donnés d'une même rangée horizontale, ces pixels donnés appartenant à des rangées verticales distinctes.

Selon une autre variante, on prévoir une première des lignes d'alimentations 187 et 191 commune à plusieurs pixels d'une même rangée horizontale et l'autre des lignes 187 et 191 commune cette fois à plusieurs pixels d'une même rangée verticale.

Pour l'une ou l'autre de ces variantes, les pixels d'une même rangée, ici verticale, partagent une même piste 901 par laquelle les tensions de consignes Vcons respectives destinées aux différents pixels de cette rangée verticale sont successivement appliquées. Un élément interrupteur de sélection en entrée de chaque pixel est prévu et cet interrupteur d'un pixel donné est activé individuellement pour permettre au pixel de recevoir la tension de consigne Vcons qui lui est destinée.

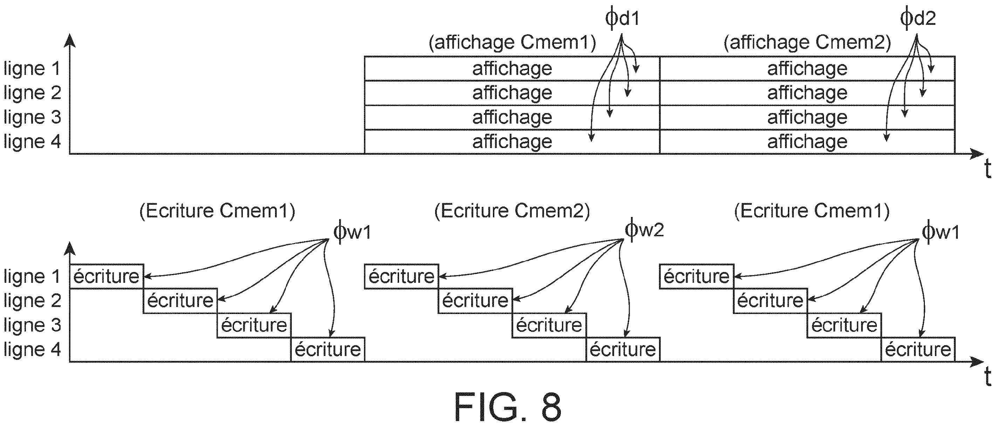

Un dispositif d'affichage tel que mis en oeuvre suivant l'invention peut s'appliquer également à un affichage de type dit « rolling shutter » (i.e. « obturation tournante », cette expression étant plus couramment employée dans le cadre de détecteurs), où comme sur le chronogramme de la figure 8, les phases d'affichages sur les différentes rangées ligne1, ligne2, ligne3, ligne 4, les émetteurs 105 de pixels sont décalées tout en se recouvrant partiellement.

Selon une autre variante de réalisation, on prévoit un circuit de pixel dont l'étage de mémorisation est cette fois muni de deux capacités de mémorisation Cmem1 et Cmem2. Un tel mode de réalisation permet, comme cela est illustré sur le chronogramme de la figure 8, de ne pas avoir de temps mort. Ainsi lors de premières phases d'affichage Φd1 on affiche une valeur de consigne écrite précédemment dans la première capacité de mémorisation Cmem1, et lors de deuxièmes phases d'affichage Φd2 on affiche une valeur de consigne écrite dans la deuxième capacité de mémorisation Cmem2. Les phases d'écriture Φw1 dans la première capacité Cmem1 sont effectuées pendant les deuxièmes phases d'affichage Φd2, tandis les phases d'écriture Φw2 dans la deuxième capacité Cmem2 sont effectuées pendant les premières phases d'affichage Φd1.

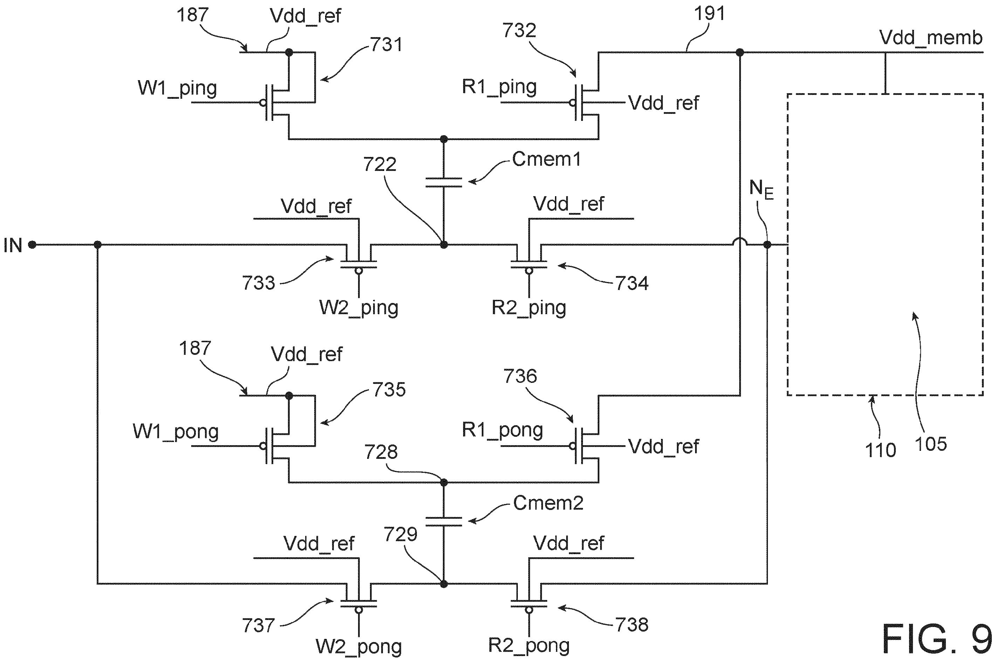

Un exemple de réalisation particulier du circuit de couplage 730 d'un pixel muni de deux capacités de mémorisation Cmem1 et Cmem2 est illustré sur la figure 9 avec des ses éléments interrupteurs sous forme de transistors 731, 732, 733, 734, 735, 736, 737, 738, ici par exemple de type PMOS, dont les états respectifs passant (interrupteur fermé) et bloqué (interrupteur ouvert), et les différentes phases de fonctionnement correspondantes sont commandées respectivement par des signaux w1_ping, r1_ping, w2_ping, r2_ping, w1_pong, r1_pong, w2_pong, r2_pong appliqués sur leurs grilles respectives.

Lors d'une phase d'écriture de la première capacité Cmem1, un transistor 731 commandé par le signal w1_ping couple une électrode 721 de cette capacité Cmem1 à l'alimentation 187 délivrant le potentiel d'alimentation Vdd_ref, tandis que le transistor 732 dont l'état est commandé par le signal r1_ping découple cette même électrode 731 de la capacité Cmem1 de l'alimentation 191 Vdd_memb de l'émetteur et de l'étage de pilotage (le circuit de pilotage étant pour des raisons de simplification représentés par un cadre en trait discontinu) délivrant un potentiel d'alimentation Vdd_ref.

L'autre électrode 722 de la première capacité Cmem1 de mémorisation est couplée via un transistor 733 commandé à l'entrée IN du circuit pour permettre la charge de la capacité Cmem1 tout en étant découplée du noeud d'entrée N_{E} du bloc de pilotage (matérialisé par un cadre en trait discontinu de cette figure) au moyen d'un transistor 734.

Lors d'une première phase d'affichage durant laquelle la valeur mémorisée par la première capacité Cmem1 est lue, le transistor 731 découple de l'alimentation 187 délivrant le potentiel d'alimentation Vdd_ref, tandis que le transistor 732 couple cette capacité Cmem1 à l'alimentation 191 Vdd_memb de l'émetteur et de l'étage de pilotage.

Lors d'une phase d'écriture de la deuxième capacité Cmem2, le transistor 735 couple une électrode 728 de cette capacité Cmem2 à l'alimentation 187 délivrant le potentiel d'alimentation Vdd_ref, tandis que le transistor 736 découple cette même électrode 728 de la deuxième capacité Cmem2 de l'alimentation 191 Vdd_memb de l'émetteur et de l'étage de pilotage. L'autre électrode 729 de la deuxième capacité Cmem2 de mémorisation est alors couplée via un transistor 737 à l'entrée IN du circuit tout en étant découplée du noeud d'entrée N_{E} du bloc de pilotage au moyen d'un transistor 738.

Puis, lors d'une deuxième phase d'affichage durant laquelle la valeur mémorisée par la deuxième capacité Cmem2 est lue, le transistor 735 découple l'électrode 728 de la deuxième capacité Cmem2 de l'alimentation 187 délivrant le potentiel d'alimentation Vdd_ref, tandis que le transistor 736 couple cette électrode 728 de la capacité Cmem2 à l'alimentation 191 Vdd_memb de l'émetteur et de l'étage de pilotage. L'autre électrode 729 est alors couplée via le transistor 738 à l'entrée du bloc de pilotage et découplée (transistor 737 bloqué) de l'entrée IN du circuit.

Un dispositif tel que décrit précédemment peut également prévoir sur son noeud d'entrée N_{E} un bloc de réinitialisation 170 tel que décrit précédemment et typiquement formé d'un interrupteur de réinitialisation 171.

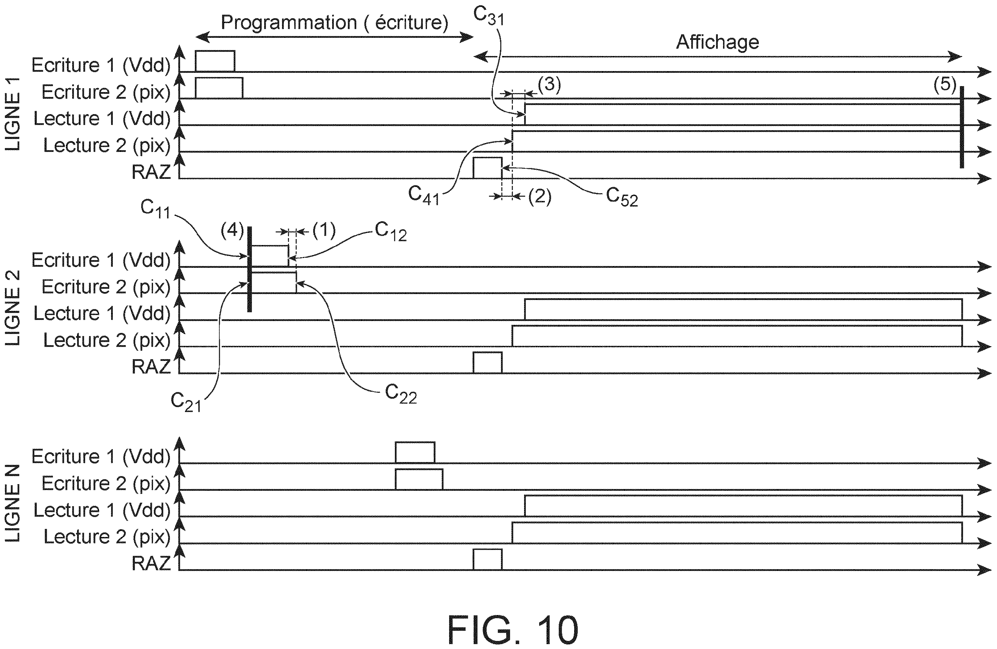

Un mode de fonctionnement particulier d'un dispositif d'affichage muni de pixels comportant un circuit du type de celui illustré précédemment en liaison avec la figure 4 est donné sur la figure 10, par l'intermédiaire de chronogrammes de signaux « Ecriture 1» et « Ecriture 2» pour la mise en oeuvre d'une écriture dans la capacité Cmem, et appliqués respectivement sur les interrupteurs 431 et 433, et de signaux « Lecture 1» et « Lecture 2» pour la commande de l'affichage de valeur mémorisée dans la capacité Cmem par la commande des interrupteurs 432 et 434 respectivement, et ce, pour un pixel d'une 1ère ligne (« LIGNE 1 »), pour un pixel d'une 2ème ligne (« LIGNE 2 ») de la matrice de la matrice, et pour un pixel d'une N-ième ligne (« LIGNE N ») de la matrice.

Les signaux représentés dans cet exemple correspondent à un exemple de réalisation particulier dans lequel les éléments interrupteurs sont des transistors de type NMOS. Si on utilise des transistors de type PMOS les signaux de commandes d'activation sont inversés par rapport à ceux illustrés.

Ici, une synchronisation du déclenchement d'un changement d'état des interrupteurs 431 et 433 (correspondant à un alignement des portions C₁₁ et C₂₁ des signaux «Ecriture 1» et «Ecriture 2») pour démarrer la phase d'écriture n'est pas obligatoire.

Un nouveau changement d'état des interrupteurs 431 et 433 pour déclencher la fin de l'opération d'écriture peut être effectué de manière décalée (décalage '( 1)' des portions C₁₂ et C₂₂ respectives des signaux «Ecriture 1» et «Ecriture 2») entre l'interrupteur 431 d'une part et l'interrupteur 433 d'autre part.

Dans l'exemple de réalisation particulier illustré, on commande un changement d'état de l'interrupteur 431 avant de commander celui de l'interrupteur 433 mais un ordre inverse peut être prévu.

Après la phase d'écriture, une phase de réinitialisation (changement d'état du signal RAZ permettant de déclencher la fermeture de l'interrupteur 171) est réalisée, dans cet exemple, simultanément entre les différentes lignes de la matrice. On souhaite ainsi imposer au noeud d'entrée N_{E} de l'étage de pilotage un potentiel, ici égal à Vdd_memb, préalable à chaque opération de lecture, afin, avant de lire une nouvelle valeur, de se prémunir de l'influence de charges résiduelles d'un échantillon précédent.

La phase de réinitialisation est interrompue un certain délai (décalage '(2)' entre C₅₂ et l'un des signaux « Lecture 1 », « Lecture 2 » régissant l'affichage) avant le démarrage de l'opération d'affichage.

Le début de l'opération d'affichage de la valeur mémorisée dans la capacité Cmem peut être prévu de sorte que les interrupteurs 432 et 434 sont commandés de manière décalée (correspondant à un décalage des portions C₃₁ et C₄₁ respectives des signaux « Lecture 1 » et « Lecture 2 ») l'un par rapport à l'autre. Dans l'exemple de réalisation particulier illustré, pour démarrer une opération d'affichage, on prévoit un changement d'état de l'interrupteur 432 avant celui de l'interrupteur 434. Toutefois, en variante, un ordre inverse peut être prévu.

Les décalages ('(1)' et '(3)') entre signaux de déclenchement de fin d'écriture et entre signaux de démarrage de lecture permettent de s'affranchir ou tout au moins de réduire des perturbations dues à des commutations et susceptibles de générer des injections de charges intempestives.

Dans l'exemple de réalisation illustré, on prévoit également une activation d'un signal de réinitialisation avant de lancer un affichage. Cela permet de vider des charges résiduelles d'un échantillon précédent avant d'afficher une nouvelle valeur.

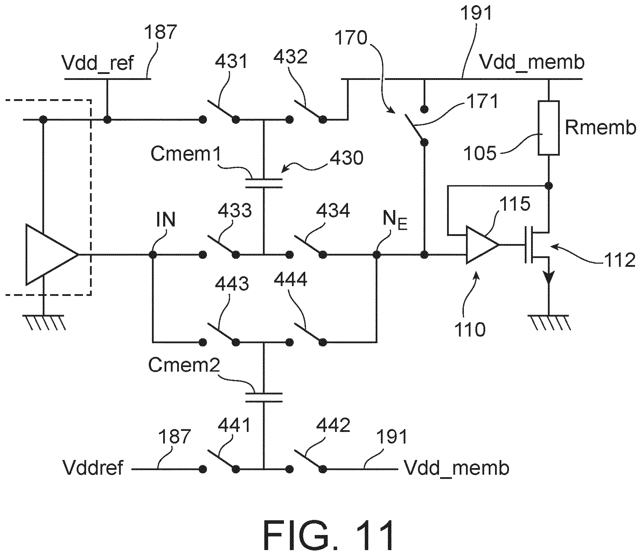

Un autre exemple d'agencement de circuit intégré de pixel à deux capacités de mémorisation Cmem1 et Cmem2 est donné sur la figure 11.

Son circuit de couplage 430 comporte des éléments interrupteurs 431, 432, 433, 434 associés à la première capacité Cmem1, ainsi que des éléments interrupteurs 443, 441, 442, 444 associés à la deuxième capacité Cmem2.

Un mode de fonctionnement particulier d'un tel circuit va à présent être donné.

Une première phase d'écriture dans la première capacité Cmem1 peut être ici réalisée simultanément à une phase d'affichage par l'émetteur 105 d'une valeur de consigne mémorisée dans la deuxième capacité Cmem2. Ces phases sont distinctes d'une première phase d'affichage par l'émetteur 105 d'une valeur de consigne mémorisée dans Cmem1 et d'une phase d'écriture de consigne dans la deuxième capacité Cmem2.

Pour cela, les éléments interrupteurs 432 et 434 ouverts pour découpler la première capacité Cmem1 du pilotage de l'émetteur 105 et les éléments interrupteurs 431 et 433 sont fermés (passants) pour permettre l'écriture dans la première capacité Cmem1. Dans le même temps, les éléments 442 et 444 sont fermés (passants) afin de permettre de coupler la deuxième capacité Cmem2 à l'entrée et les éléments interrupteurs 441 et 443 sont ouverts pour découpler la deuxième capacité Cmem2 de l'étage de pilotage de l'émetteur 105.

Pour une phase d'écriture ultérieure dans la deuxième capacité Cmem2 réalisée ici simultanément à une phase d'affichage de la valeur mémorisée dans la première capacité Cmem1, les éléments interrupteurs 432 et 434 sont fermés afin de permettre de coupler la première capacité Cmem1 à l'émetteur 105, tandis que les éléments 431 et 433 sont ouverts pour déconnecter la première capacité Cmem1 de l'entrée du circuit. Dans le même temps, les éléments 442 et 444 sont ouverts afin de permettre de découpler la deuxième capacité Cmem2 de l'étage de pilotage de l'émetteur 105 et les éléments 441 et 443 sont fermés pour permettre l'écriture dans la deuxième capacité Cmem2, cette capacité étant alors couplée à l'entrée du circuit.

Là encore, un interrupteur de réinitialisation 171 est prévu entre le noeud N_{E} d'entrée du bloc de pilotage et la première ligne d'alimentation 191. Préalablement à chaque phase d'affichage de la valeur mémorisée dans la première capacité Cmem1 ou de la valeur mémorisée dans la deuxième capacité Cmem2, pour permettre d'évacuer des charges résiduelles du noeud N_{E}, l'interrupteur 171 est fermé (i.e. rendu passant). Ainsi, le noeud N_{E} est mis à un même potentiel donné préalablement à chaque phase d'affichage. Ce potentiel donné correspondant au potentiel Vdd_memb délivré par la première ligne d'alimentation 191.

Dans l'un ou l'autre des exemples qui viennent d'être décrits, un circuit numérique de commande externe aux pixels (non représenté) gère la synchronisation et la séquence de signaux de commande des phases d'écriture, de ré-initialisation des capacités de mémorisation Cmem1, Cmem2, et d'affichage. Dans l'exemple de réalisation particulier de la figure 11, un tel circuit permet de piloter l'état fermé (i.e. passant) ou ouvert des interrupteurs 431, 432, 433, 434, 443, 444, 441, 442 du circuit de couplage ainsi que celui de l'interrupteur 171 de réinitialisation.

L'invention s'applique tout particulièrement aux dispositifs d'affichage infra-rouge pour lesquelles le phénomène de chutes de tension peut s'avérer particulièrement significatif. Elle s'applique également aux dispositifs d'affichage dans le proche infra-rouge avec des émetteurs produisant un rayonnement typiquement dans une gamme de longueurs d'onde 0,78 et 2,5 µm. On peut également l'adapter à d'autres dispositifs matriciels, et en particulier à des afficheurs fonctionnant dans le domaine du visible.

## Revendications

1. Dispositif d'affichage infrarouge, pour l'affichage d'une scène et comprenant une pluralité de pixels chaque pixel de ladite pluralité de pixels étant doté :
- d'un émetteur (105) infrarouge comprenant une première borne couplée à une première ligne d'alimentation (191) et une deuxième borne couplée à une sortie d'un étage de pilotage,
- dudit étage (110) de pilotage de l'émetteur, cet étage de pilotage de l'émetteur comprenant un élément de conversion (112) tension-courant pour recevoir une tension de consigne (Vcons) et délivrer un courant de commande basé sur cette tension de consigne (Vcons ), l'étage (110) de pilotage étant doté en outre d'un amplificateur (115) comportant une première entrée couplée à un étage de mémorisation (120) et d'une deuxième entrée couplée à l'émetteur (105), une sortie de l'amplificateur étant reliée à la deuxième entrée de sorte à réaliser une contre-réaction,
- de l'étage (120) de mémorisation, cet étage de mémorisation étant couplé à un noeud d'entrée (N_{E}) de l'étage de pilotage, l'étage de mémorisation comprenant au moins une capacité de mémorisation (Cmem, Cmem1), qui, lors de phases dites « d'écriture dans la capacité de mémorisation » se charge à la tension de consigne (Vcons) et lors de phases dites « phases d'affichage de valeur mémorisée par la capacité de mémorisation » délivre à l'étage de pilotage la tension de consigne (Vcons), ladite au moins une capacité de mémorisation (Cmem, Cmem1) ayant une première électrode agencée entre le noeud d'entrée (N_{E}) de l'étage de pilotage (110) et un noeud d'entrée (IN) du pixel et une deuxième électrode agencée entre la première ligne d'alimentation (191) et une autre ligne d'alimentation (187),
chaque pixel du dispositif d'affichage étant doté en outre d'un circuit de couplage (130, 430, 730), comportant des éléments interrupteurs (131, 132 ; 431, 432, 433, 434 ; 731, 732, 733, 734, 735, 736, 737, 738), dont les états respectifs passant et bloqué, sont commandées respectivement par des signaux de commande de phase d'affichage et d'écriture, le circuit couplage étant configuré pour:
- lors de phases « d'écriture dans la capacité de mémorisation »: découpler la capacité de mémorisation (Cmem, Cmem1) de ladite première ligne d'alimentation (191) tout en couplant la capacité de mémorisation à l'autre ligne d'alimentation (187),
- lors de phases « d'affichage de valeur mémorisée par la capacité de mémorisation »: coupler la première capacité de mémorisation (Cmem, Cmem1) à la première ligne d'alimentation (191) tout en découplant la capacité de mémorisation (Cmem, Cmem1) de l'autre ligne d'alimentation.

2. Dispositif d'affichage selon la revendication 1, dans lequel l'élément de conversion tension courant comporte un transistor (112), doté d'une électrode de source ou de drain connectée à l'émetteur (105).

3. Dispositif d'affichage selon l'une des revendications 1 ou 2, comprenant en outre un interrupteur de réinitialisation (171) entre le noeud d'entrée (N_{E}) de l'étage de pilotage et ladite première ligne d'alimentation (191) pour, préalablement à chaque phase d'affichage, coupler le noeud d'entrée (N_{E}) de l'étage de pilotage (110) à ladite première ligne d'alimentation (191) lorsque l'interrupteur de réinitialisation (171) est rendu passant.

4. Dispositif d'affichage selon l'une des revendications précédentes, dans lequel le circuit couplage comprend :
- un premier élément interrupteur (431) entre une première électrode de la capacité de mémorisation (Cmem, Cmem1) et l'autre ligne d'alimentation (187),
- un deuxième élément interrupteur (433) entre une deuxième électrode de la capacité de mémorisation (Cmem, Cmem1) et un noeud d'entrée (IN) de l'étage de mémorisation,
- un troisième élément interrupteur (432) entre la première électrode de la capacité de mémorisation (Cmem, Cmem1) et la première ligne d'alimentation (191),
- un quatrième élément interrupteur (434) entre la deuxième électrode de la première capacité de mémorisation (Cmem, Cmem1) et un noeud d'entrée (N_{E}) de l'étage de pilotage de l'émetteur,
et dans lequel la fin desdites phases d'écriture dans la capacité de mémorisation est déclenchée respectivement par un premier signal de déclenchement de fin d'écriture appliqué audit premier élément interrupteur (431) et par un deuxième signal de déclenchement de fin d'écriture appliqué audit autre élément interrupteur (433), le premier signal de déclenchement de fin d'écriture et le deuxième signal de déclenchement de fin d'écriture étant décalés dans le temps et/ou dans lequel un démarrage desdites phases d'affichage d'une valeur mémorisée dans la capacité de mémorisation est déclenchée respectivement par un premier signal déclenchement de démarrage d'affichage appliqué audit troisième élément interrupteur (433) et un deuxième signal de déclenchement de démarrage d'affichage appliqué audit quatrième élément interrupteur (434), le premier signal de déclenchement de démarrage d'affichage et le deuxième signal de déclenchement de démarrage d'affichage étant décalés dans le temps.

5. Dispositif d'affichage selon l'une des revendications 1 à 3, dans lequel ladite capacité de mémorisation est une première capacité de mémorisation (Cmem1) et dans lequel l'étage de mémorisation comporte également une deuxième capacité de mémorisation (Cmem2), la deuxième capacité de mémorisation (Cmem2) ayant une première électrode agencée entre le noeud d'entrée (N_{E}) de l'étage de pilotage (110) et un noeud d'entrée (IN) du pixel et une deuxième électrode agencée entre la première ligne d'alimentation (191) et une autre ligne d'alimentation (187),
le circuit couplage étant configuré pour :
- lors des phases « d'écriture dans la première capacité de mémorisation »: déconnecter la première électrode de la première capacité de mémorisation (Cmem1) de ladite première ligne d'alimentation (191) tout en connectant la première électrode de la première capacité de mémorisation (Cmem1) à ladite autre ligne d'alimentation (187) et connecter la deuxième électrode de la première capacité de mémorisation (Cmem1) au noeud d'entrée (IN) du pixel tout en déconnectant la deuxième électrode de la première capacité de mémorisation (Cmem1) du noeud d'entrée (N_{E}) dudit étage (110) de pilotage,
- lors des phases « d'affichage de valeur mémorisée par la première capacité de mémorisation »: connecter la première électrode de la première capacité de mémorisation (Cmem1) à la première ligne d'alimentation (191) tout en déconnectant la première électrode de la première capacité de mémorisation (Cmem1) de ladite autre ligne d'alimentation (187) et déconnecter la deuxième électrode de la première capacité de mémorisation (Cmem1) du noeud d'entrée (IN) du pixel tout en connectant la deuxième électrode de la première capacité de mémorisation (Cmem1) au noeud d'entrée (N_{E}) dudit étage (110) de pilotage,
- lors de phases « d'écriture dans la deuxième capacité de mémorisation »: déconnecter la première électrode de la deuxième capacité de mémorisation (Cmem2) de ladite première ligne d'alimentation (191) tout en connectant la première électrode de la deuxième capacité de mémorisation (Cmem2) à ladite autre ligne d'alimentation (187) et connecter la deuxième électrode de la deuxième capacité de mémorisation (Cmem2) au noeud d'entrée (IN) du pixel tout en déconnectant la deuxième électrode de la deuxième capacité de mémorisation (Cmem2) du noeud d'entrée (N_{E}) dudit étage (110) de pilotage, lors des phases « d'affichage de valeur mémorisée par la deuxième capacité de mémorisation »: connecter la première électrode de la deuxième capacité de mémorisation (Cmem2) à la première ligne d'alimentation (191) tout en déconnectant la première électrode de la deuxième capacité de mémorisation (Cmem2) de ladite autre ligne d'alimentation (187) et déconnecter la deuxième électrode de la deuxième capacité de mémorisation (Cmem2) du noeud d'entrée (IN) du pixel tout en connectant la deuxième électrode de la deuxième capacité de mémorisation (Cmem2) au noeud d'entrée (N_{E}) dudit étage (110) de pilotage, et
dans lequel les phases d'écriture dans la première capacité de mémorisation sont concomitantes aux phases de lecture dans la deuxième capacité, et dans lequel les phases d'écriture dans la deuxième capacité de mémorisation sont concomitantes aux phases de lecture dans la première capacité.

6. Dispositif d'affichage selon l'une des revendications 1 à 3, dans lequel ladite capacité de mémorisation est une première capacité de mémorisation (Cmem1) et dans lequel l'étage de mémorisation comporte également une deuxième capacité de mémorisation (Cmem2), et dans lequel le circuit de couplage (430) comprend :
- un premier élément interrupteur (432) entre une première électrode de la première capacité de mémorisation (Cmem1) et la première ligne d'alimentation (191)
- un deuxième élément interrupteur (431) entre la première électrode de la première capacité de mémorisation (Cmem1) et l'autre ligne d'alimentation (187),
- un troisième élément interrupteur (442) entre une première électrode de la deuxième capacité de mémorisation (Cmem2) et la première ligne d'alimentation (191)
- un quatrième élément interrupteur (441) entre la première électrode de la deuxième capacité de mémorisation (Cmem2) et l'autre ligne d'alimentation (187),
- un cinquième élément interrupteur (433) entre une deuxième électrode de la première capacité de mémorisation (Cmem1) et un noeud d'entrée (IN) de l'étage de mémorisation,
- un sixième élément interrupteur (443) entre une deuxième électrode de la deuxième capacité de mémorisation (Cmem2) et le noeud d'entrée (IN) de l'étage de mémorisation,
- un septième élément interrupteur (434) entre la deuxième électrode de la première capacité de mémorisation (Cmem1) et un noeud d'entrée (N_{E}) de l'étage de pilotage de l'émetteur,
- un huitième élément interrupteur (444) entre la deuxième électrode de la deuxième capacité de mémorisation (Cmem2) et le noeud d'entrée (N_{E}) de l'étage de pilotage de l'émetteur.

7. Dispositif d'affichage selon l'une des revendications 1 à 6, dans lequel un premier pixel de ladite pluralité de pixels appartient à une première rangée de pixels et dans lequel un deuxième pixel appartient à une deuxième rangée de pixels distincte de la première rangée, et dans lequel les phases d'affichage sont des phases d'affichage concomitantes des pixels de la première rangée et de la deuxième rangée de pixels, le circuit de couplage du deuxième pixel étant configuré en outre pour, lors desdites phases d'affichage, coupler la capacité de mémorisation du deuxième pixel à ladite ligne première d'alimentation tout en découplant la capacité de mémorisation du deuxième pixel de ladite autre ligne d'alimentation et pour lors de phases d'écriture dans la capacité de mémorisation du deuxième pixel découpler la capacité de mémorisation du deuxième pixel de ladite première ligne d'alimentation tout en couplant la capacité de mémorisation du deuxième pixel à ladite autre ligne d'alimentation.

8. Dispositif d'affichage selon l'une des revendications 1 à 6, dans lequel un premier pixel de ladite pluralité de pixels appartient à une première rangée de pixels et dans lequel un deuxième pixel d'une deuxième rangée de pixels appartient à une autre pluralité de pixels et dans lequel des phases d'affichage de pixels de la deuxième rangée sont au moins partiellement décalées des phases d'affichage de la première rangée, le deuxième pixel ayant un circuit de couplage configuré pour lors de phases d'affichage du deuxième pixel coupler une capacité de mémorisation du deuxième pixel à la ligne première d'alimentation tout en découplant la capacité de mémorisation du deuxième pixel de ladite autre ligne d'alimentation et pour lors de phases d'écriture dans la capacité de mémorisation du deuxième pixel découpler la capacité de mémorisation du deuxième pixel de la première ligne d'alimentation tout en couplant la capacité de mémorisation du deuxième pixel à ladite ligne autre ligne d'alimentation.

9. Dispositif d'affichage selon l'une des revendications 1 à 8, dans lequel l'émetteur (105) est alimenté entre ladite première ligne d'alimentation prévue pour acheminer un potentiel de polarisation donné (Vdd_memb) et une deuxième ligne de polarisation prévue pour acheminer un potentiel de référence ou de masse (GND), ladite autre ligne (187) étant prévue pour acheminer un potentiel (Vdd_ref) sensiblement égal au potentiel donné, l'étage de mémorisation (130) étant relié à la deuxième ligne de polarisation.

10. Dispositif d'affichage selon l'une des revendications 1 à 9, dans lequel la première ligne d'alimentation est connectée à un réseau d'alimentation et dans lequel ladite autre ligne d'alimentation est connectée à un autre réseau d'alimentation isolé du premier réseau d'alimentation.

11. Dispositif d'affichage selon l'une des revendications 1 à 10, dans lequel les éléments interrupteurs du circuit de couplage sont des transistors, en particulier des transistors MOS.
